# EUROPEAN PATENT SPECIFICATION

(11) **EP 0 775 430 B1**
(45) Date of publication and mention of the grant of the patent: **23.08.2006**
(21) Application number: 95905157.4
(22) Date of filing: 05.01.1995
(51) Int. Cl.: H04Q 7/32

(54) **ARRANGEMENT FOR ADAPTING A SIGNAL LEVEL IN A MOBILE PHONE**
VORRICHTUNG ZUR ANPASSUNG EINES SIGNALPEGELS IN EINEM MOBILTELEFON
DISPOSITIF POUR ADAPTER LE NIVEAU DE SIGNAL DANS UN TELEPHONE MOBILE

(30) Priority: 05.01.1994 FI 940049
(43) Date of publication of application: 28.05.1997
(73) Proprietor: Nokia Corporation, 02150 Espoo (FI)
(72) Inventor: HALLIKAINEN, Jyrki, FIN-90570 Oulu (FI); KATTILAKOSKI, Matti, FIN-90540 Oulu (FI); KORKEAKANGAS, Pekka, FIN-90100 Oulu (FI)
(74) Representative: Nordin, Leif Göran
(86) International application number: PCT/FI1995/000005
(87) International publication number: WO 1995/019096

(56) References cited:
- EP-A- 0 435 664
- EP-A- 0 455 252
- US-A- 4 558 178
- US-A- 4 673 861
- US-A- 5 265 093

## Description

The object of the present invention is a circuit arrangement for adapting internal signal levels in a mobile phone according to an auxiliary device connected thereto, the mobile phone having a microprocessor for controlling its function.

Modern mobile, i.e. cellular phones enable the use of a number of different auxiliary devices connected to the mobile phone. Examples include different hands-free units, modems and telefaxes. Each separate auxiliary device requires a given audio signal level of its own in order to operate properly.

This was generally not a problem in earlier cellular phone generations because the cellular phone was designed so that generally it could use only one specific auxiliary device, whereby the audio signal level of the connection was, of course, set or adapted to the appropriate level. If, for some reason, some other auxiliary device than the one originally intended was used, it was connected to the mobile phone through special adaptation cables.

Since today, as already stated, a number of different auxiliary devices can be used in connection with mobile phones, in principle a number of different sized adaptation cables must also be provided, which naturally renders the efficient use of the system complicated. Therefore, the purpose of the present invention is to eliminate this problem and provide an arrangement which allows different auxiliary devices requiring different audio signal levels to be connected to the same cellular phone and to the same connection without using connection cables which are adapted in various ways.

In order to accomplish this object, the invention is characterized in the detail disclosed in appended claim 1. Preferred embodiments of the invention are disclosed in the dependent claims.

The basic idea in the invention is thus that the actual mobile phone identifies the connected auxiliary device and sets the signal level of the connection to the required level on the basis of the data stored in its memory.

It should be mentioned that with respect to the type of internal or external power source connected to the mobile phone it is known to adapt the charging of a battery according to the identified battery type, on one hand, and also to adapt given user features of the radio telephone according to the respective power source of the radio telephone, on the other hand. However, this known technique as represented by EP 455252 (A) does not extend to the degree of presenting the idea of automatically adapting the respective audio level of the cellular phone according to the related auxiliary device.

There is also disclosed a system and a method in document US 5,265,093 for communicating control signals between a digital mobile transceiver, a digital control head, and a mobile data terminal over a common serial peripheral bus uses a message protocol and architecture. The design according to the document provides a "general purpose serial bus" within the architecture of a radio transceiver to which different types of "options" can be connected. However, there are some disadvantages in the arrangement described in document US 5,265,093, because the arrangement according to the document is suitable only for considering digital signal and thus it is not competent for adapting of the analogical signal so that the level of the signal will be changed.

The invention is described in the following in more detail in the form of an example and with reference to the appended drawings, in which:
Fig. 1 shows an embodiment of the adjustment according to the invention in the form of a block diagram,
Fig. 2 shows the control event of the adjustment in the form of a flow chart,
Fig. 3 shows the identification arrangement of the auxiliary device using a hook signal, and
Fig. 4 shows the identification arrangement with a serial interface.

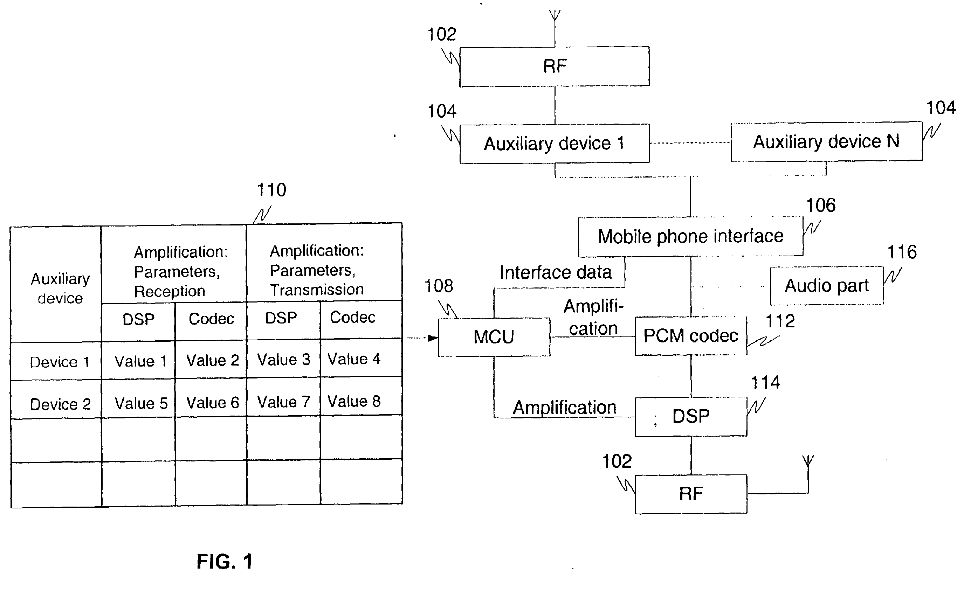

The auxiliary devices 104 in Fig. 1 are marked with reference numbers 1-N. The auxiliary device can also be connected to an antenna through an RF-part 102, as illustrated in auxiliary device 1. The auxiliary device is connected, via the mobile phone interface 106, to the cellular phone the parts of which are shown in the lower part of the Figure below the interface 106.

Microprocessor MCU 108 of the mobile phone receives the data on the type of related auxiliary device 104 that is connected via the interface 106. The microprocessor 108 is provided with a memory in which data 110 on the amplification respectively required has been stored beforehand, to ensure that the adaptation to the related auxiliary device 104 is appropriate. This amplification data 110 applies to the PCM-codec 112 and/or the digital signal processor DSP 114 of the mobile phone. In the block diagram 110, the adjustment signal of the amplification is marked from microprocessor MCU 108 to both the PCM-codec 112 and the digital signal processor DSP 114. According to the block diagram 110 the following data for each auxiliary device has been stored in the memory:
- the type identifier of the auxiliary device (device 1, device 2,...),
- the amplification parameter of the DSP used in reception (value 1, value 5,...)
- the amplification parameter of the codec used in reception (value 2, value 6,...)
- the amplification parameter of the DSP used in transmission (value 3, value 7,...), and
- the amplification parameter of the codec used in transmission (value 4, value 8,...)

The block diagram 110 further illustrates the audio part 116 and the RF-part 102 of the cellular phone in different blocks, the antenna of the cellular phone being connected to the RF-part 102.

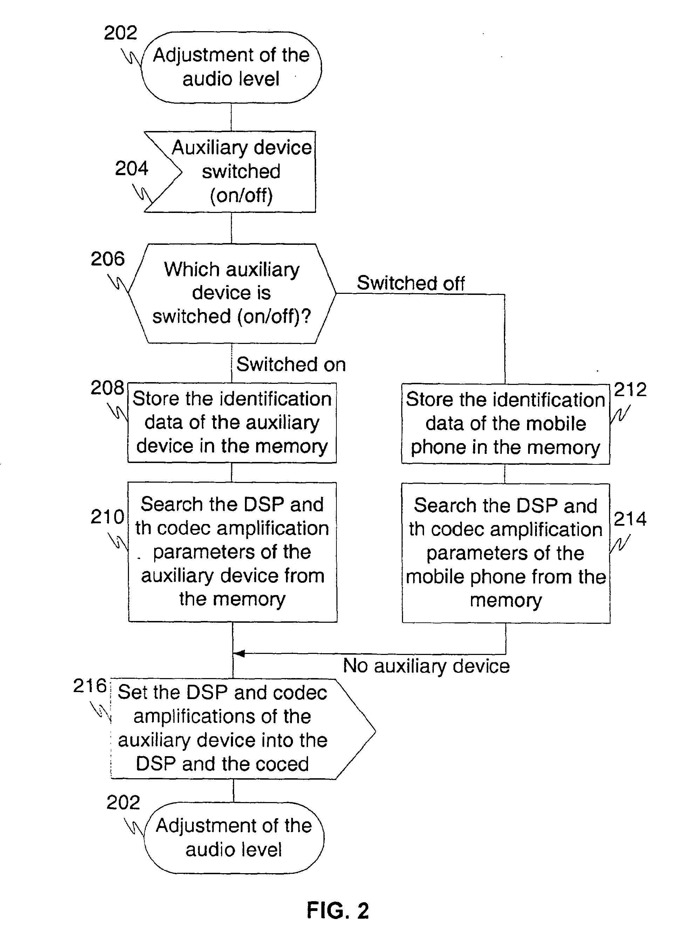

Fig. 2 shows the operation of the microprocessor in the form of a flow chart.

The microprocessor samples 202 the interface of the auxiliary device to see if the identifier of the auxiliary device has changed 204. If a new auxiliary device has been connected 206 to the interface, the microprocessor stores 208 in its memory the identification data of the auxiliary device and searches 210 from its memory the amplification parameters of the DSP and the codec on the basis of this data. If, instead, an auxiliary device, which has been previously connected to the interface, is disconnected 206, the microprocessor stores 212 in its memory the identification data of the telephone and searches 214 the amplification values of the DSP and/or the codec related to the actual telephone on the basis of this data. This can also be done when an auxiliary device, which does not have the said identification, has been connected to the interface. Having searched the correct amplification parameters from its memory, the microcomputer sets 216 the amplification of the DSP and/or the codec on the basis of these parameters.

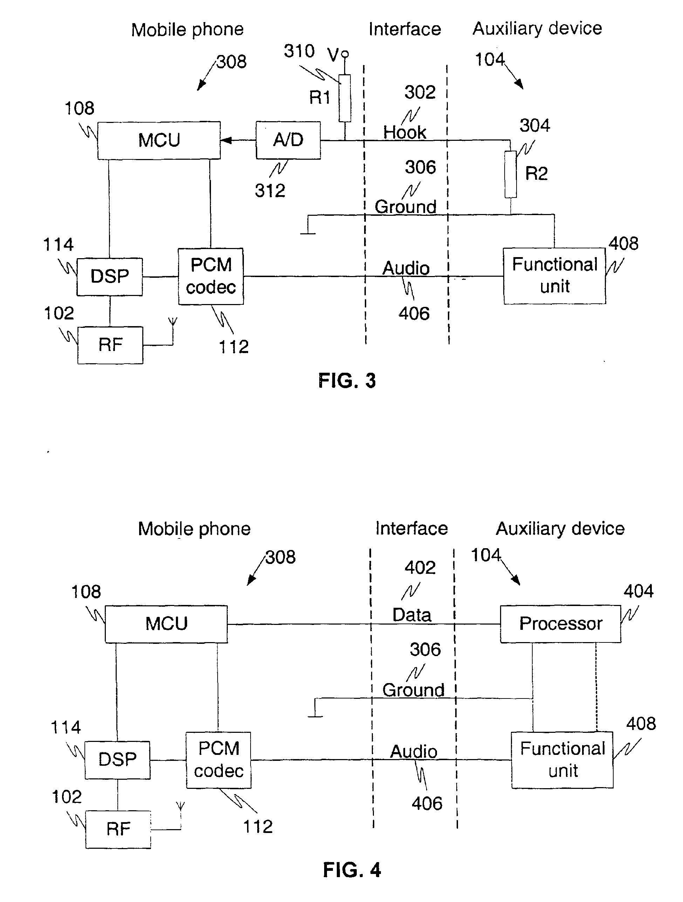

The auxiliary device identification disclosed herein can be implemented in a number of ways, to a large extent by using the features which already exist in the device. Figs. 3 and 4 illustrate two arrangements for transmitting identification data via the interface.

In Fig. 3 the identification of the auxiliary device 104 is carried out by what is known as hook-line 302. The auxiliary device 104 comprises a resistor R2 304 connected between the hook-line 302 and the ground line 306, the resistance of which is characteristic to the auxiliary device 104 type in question. When the auxiliary device 104 is connected to a telephone 308, the telephone 308 supplies power to the hook-line 302 via a resistor R1 310. One of the poles of the resistor R1 310 is connected to constant voltage V, whereby the voltage of the hook-line 302 with respect to ground potential 306 is V*R2/(R1+R2). The hook-line 302 is connected in the telephone 308 to the A/D input of an analog-to-digital converter 312, the output of which is further connected to microprocessor MCU 108. Since the voltage of the hook-line 302 is proportional to the value of resistance R2 304 of the auxiliary device 104, the microprocessor 108 can identify the auxiliary device 104 used by reading the voltage data. Since the resistances comprise a given tolerance, a certain voltage range of the hook-line 302 has to be reserved for each auxiliary device 104 identification. In addition to the tolerances of the resistances, the accuracy and resolution capacity of the A/D converter 312 have an impact on the number of possible auxiliary device 104 types.

The connection of an auxiliary device 104 can be sent to the microprocessor 108 through an interrupt line (not shown in the Fig.), for instance, after which the microprocessor 108 specifies on the basis of the hook-line 302 which device 104 is in question. However, in this case a circuit has to be arranged in the interrupt, providing an interrupt pulse in conjunction with both the connecting and disconnecting of the auxiliary device 104. Such circuit can be implemented in a known manner using a timer circuit, for instance. According to the invention, the microprocessor 108 repeatedly reads the output of the digital converter 312 in order to identify at the connection or disconnection of the auxiliary device 104, such arrangement providing a clear advantage as to the circuit technology.

The use of the hook-line 302 for the identification of auxiliary device 104 is an advantageous solution in passive auxiliaries, such as earpieces, which contain no control electronics.

Another alternative for the identification of auxiliary device 104 is shown in Fig. 4 in which information is transferred between a mobile phone 308 and an auxiliary device 104 using a digital serial bus (data) 402 included in the interface. In this case, a given identification code corresponds to each auxiliary device 104, the code being transmitted by the processor 404 of the auxiliary device 104 to the microprocessor 108 of the telephone 308. Thereafter the microprocessor 108 can ask the type specifications of the auxiliary device 104 through the serial line 402. Alternatively, the auxiliary device 104 can transmit the identification message automatically through the serial line 402 after the connection, whereby the microprocessor 108 of the telephone 308 identifies both the connection and the type of the auxiliary device 104. Thereafter a possible disconnecting of the auxiliary device 104 can be indicated using repeatedly transmitted messages between the telephone 308 and the auxiliary device 104.

The identification method based on the use of a serial bus 402 is well-adapted especially to active auxiliary devices 104 which comprise a microprocessor 404 controlling the functions of the auxiliary device 104, whereby the identification facility does not cause additional expenses in the production of the auxiliary device 104.

In addition, an audio line 406 included in the interface is marked in Figs. 3 and 4, an audio signal being transmitted through the line between the PCM-codec 112 of the mobile phone 308 and the functional unit 408 of the auxiliary device 104.

As already stated in the beginning, the invention can be used to connect auxiliary devices into one interface of a mobile phone without separate adaptation parts, even though the input and output signal levels of the auxiliary devices deviate from each other. Such auxiliary devices can include, for instance, earpieces, hands free units applied in car use, hands free units applied in office use, hand-held telephones, data modems, telefax devices, etc.

The detailed dimensions of the circuit solutions described above are not disclosed in more detail in this description because it is considered to be part of the normal skills of those skilled in the art, which he or she can apply after reading this description.

Only a few exemplifying applications of the method and circuit arrangement according to the invention are disclosed above. Naturally, the principle according to the invention can be modified within the scope of the Claims, for instance with respect to the structural details and areas of use.

## Claims

1. A circuit arrangement for adapting internal signal levels in a mobile phone (308) according to an auxiliary device (104) connected thereto, the mobile phone having a microprocessor (108) for controlling its function, and the mobile phone (308) being adapted to identify the type of auxiliary device (104) respectively connected on the basis of a signal received from the auxiliary device (104), said microprocessor comprising memory means for storing digital signal level parameters related to the auxiliary device and being adapted to adjust the internal signal levels of the mobile phone (308) to suitable levels according to the auxiliary device (104), **characterized in that** the microprocessor (108) is adapted to repeatedly read the signal from the auxiliary device to identify a connection or disconnection of the auxiliary device (104).

2. A circuit arrangement according to Claim 1, **characterized in that** the interface between the mobile phone (308) and the auxiliary device (104) comprises a first signal line (302, 402), through which the identification data of the auxiliary device (104) is transmitted, and a second signal line (406) which is used to transmit an audio signal, whereby, on the basis of the identification data received through the first signal line (302, 402), the mobile phone (308) is adapted to adjust its internal signal levels related to said audio signal (406) to fit the auxiliary device (104).

3. A circuit arrangement according to Claim 1 or 2, **characterized in that** the auxiliary device (104) is adapted to transmit the identification data thereof using the digital data bus (402) of the telephone (308).

4. A circuit arrangement according to Claim 3, **characterized in that** the mobile phone (308) is adapted to recognize the disconnection of the auxiliary device (104) on the basis of a missing message.

5. A circuit arrangement according to Claim 1 or 2, **characterized in that** the auxiliary device (104) comprises an electric component, such as a resistor (304), which is connected between the line (302) used to identify the auxiliary device (104) and called a hook-line (302) in the following, and a third line (306), the resistance comprising an impedance (resistance) specified according to the type of auxiliary device (104), and the mobile phone (308) identifies the auxiliary device (104) by supplying a current and/or a voltage between the hook-line (302) and the third line (306) and by measuring the voltage and/or current generated in the hook-line (302).

6. A circuit arrangement according to Claim 5, **characterized in that** the mobile phone (308) comprises an analog-to-digital convener (312) for converting the voltage data of the hook-line (302) into digital data, and the microprocessor (108) being adapted to read said digital data to identify the auxiliary device (104).

7. A circuit arrangement according to Claim 1, **characterized in that** the signal level parameters (110), which are used when no auxiliary device (104) is connected or when no data of the signal level parameters related to the connected auxiliary device (104) has been stored in the memory means, are stored in the memory means of the mobile phone (308).

8. A circuit arrangement according to Claim 1 or 7, **characterized in that** the microprocessor (108) reads from the memory means the signal level parameters (110) related to the connected auxiliary device (104) type or the signal level parameters (110) related to the audio part of the mobile phone (308) and sets (216) the digital signal processor (114) of the telephone (308) and/or the amplification of the codec (112) to values corresponding to the parameters (110) read.

## Patentansprüche

1. Schaltungsanordnung zum Anpassen interner Signalpegel in einem Mobiltelefon (308) gemäß einem Zusatzgerät (104), das daran angeschlossen ist, wobei das Mobiltelefon einen Mikroprozessor (108) zum Steuern seiner Funktion aufweist, und wobei das Mobiltelefon (308) dazu geeignet ist, die Art des jeweils angeschlossenen Zusatzgeräts (104) auf Grundlage eines Signals, das von dem Zusatzgerät (104) empfangen ist, zu identifizieren, wobei der Mikroprozessor Speichermittel zum Speichern von Digitalsignalpegelparametern bezüglich des Mobiltelefons (308) umfasst und dazu geeignet ist, die internen Signalpegel des Mobiltelefons (308) an geeignete Pegel gemäß dem Zusatzgerät (104) anzupassen, **dadurch gekennzeichnet, dass** der Mikroprozessor (108) dazu geeignet ist, das Signal von dem Zusatzgerät wiederholt zu lesen, um einen Anschluss oder eine Trennung des Zusatzgeräts (104) zu identifizieren.

2. Schaltungsanordnung nach Anspruch 1, **dadurch gekennzeichnet, dass** die Schnittstelle zwischen dem mobiltelefon (308) und dem Zusatzgerät (104) eine erste Signalleitung (302, 402), über die die Identifizierungsdaten des Zusatzgeräts (104) übertragen sind, und eine zweite Signalleitung (406) umfasst, die zum Übertragen eines Audiosignals benutzt ist, wobei das Mobiltelefon (308) auf Grundlage der über die erste Signalleitung (302, 402) empfangenen Identifizierungsdaten dazu geeignet ist, seine internen Signalpegel bezüglich des Audiosignals (406) anzupassen, um dem Zusatzgerät (104) zu entsprechen.

3. Schaltungsanordnung nach einem der Ansprüche 1 oder 2, **dadurch gekennzeichnet, dass** das Zusatzgerät (104) dazu geeignet ist, seine Identifizierungsdaten unter Benutzung des digitalen Datenbusses (402) des Telefons (308) zu übertragen.

4. Schaltungsanordnung nach Anspruch 3, **dadurch gekennzeichnet, dass** das Mobiltelefon (308) dazu geeignet ist, die Trennung des Zusatzgeräts (104) auf Grundlage einer fehlenden Nachricht zu erkennen.

5. Schaltungsanordnung nach einem der Ansprüche 1 oder 2, **dadurch gekennzeichnet, dass** das Zusatzgerät (104) ein elektrisches Bauteil umfasst, wie etwa einen Widerstand (304), das zwischen der Leitung (302), die zum Identifizieren des Zusatzgeräts (104) benutzt ist und im Folgenden Hook-Leitung (302) genannt wird, und einer dritten Leitung (306) angeschlossen ist, wobei der Widerstand eine Impedanz (Widerstand) aufweist, die der Art des Zusatzgeräts (104) gemäß spezifiziert ist, und das Mobiltelefon (308) das Zusatzgerät (104) durch Anlegen eines Stroms und/oder einer Spannung zwischen der Hook-Leitung (302) und der dritten Leitung (306) und Messen der Spannung und/oder des Stroms, der in der Hook-Leitung (302) erzeugt ist, identifiziert.

6. Schaltungsanordnung nach Anspruch 5, **dadurch gekennzeichnet, dass** das Mobiltelefon (308) einen Analog-/Digitalwandler (312) zum Umwandeln der Spannungsdaten der Hook-Leitung (302) in digitale Daten umfasst und der Mikroprozessor (108) zum Lesen der digitalen Daten zum Identifizieren des Zusatzgeräts (104) geeignet ist.

7. Schaltungsanordnung nach Anspruch 1, **dadurch gekennzeichnet, dass** die Signalpegelparameter (110), die benutzt sind, wenn kein Zusatzgerät (104) angeschlossen ist oder wenn keine Daten der Signalpegelparameter bezüglich des angeschlossenen Zusatzgeräts (104) in dem Speichermittel gespeichert sind, in dem Speichermittel des Mobiltelefons (308) gespeichert sind.

8. Schaltungsanordnung nach einem der Ansprüche 1 oder 7, **dadurch gekennzeichnet, dass** der Mikroprozessor (108) die Signalpegelparameter (110) bezüglich der Art des angeschlossenen Zusatzgeräts (104) oder die Signalpegelparameter (110) bezüglich des Audioteils des Mobiltelefons (308) aus dem Speichermittel liest und den Digitalsignalprozessor (114) des Telefons (308) und/oder die Verstärkung des Codec (112) auf Werte einstellt (216), die den gelesenen Parametern (110) entsprechen.

## Revendications

1. Agencement de circuits permettant d'adapter des niveaux de signal interne à l'intérieur d'un téléphone mobile (308) en fonction d'un dispositif auxiliaire (104) connecté à celui-ci, le téléphone mobile comprenant un microprocesseur (108) qui sert à commander son fonctionnement, et le téléphone mobile (308) étant adapté pour identifier le type de dispositif auxiliaire (104) respectivement connecté sur la base d'un signal reçu depuis le dispositif auxiliaire (104), ledit microprocesseur comprenant des moyens de mémoire servant à stocker des paramètres de niveau de signal numérique relatifs au dispositif auxiliaire et étant adapté pour ajuster les niveaux de signal interne du téléphone mobile (308) à des niveaux appropriés en fonction du dispositif auxiliaire (104), **caractérisé en ce que** le microprocesseur (108) est adapté pour lire de façon répétée le signal émis par le dispositif auxiliaire de façon à identifier une connexion ou une déconnexion du dispositif auxiliaire (104).

2. Agencement de circuits selon la revendication 1, **caractérisé en ce que** l'interface entre le téléphone mobile (308) et le dispositif auxiliaire (104) comprend une première ligne de signal (302, 402), par le biais de laquelle les données d'identification du dispositif auxiliaire (104) sont transmises, et une deuxième ligne de signal (406) qui est utilisée afin d'émettre à un signal audio, moyennant quoi, sur la base des données d'identification reçues par le biais de la première ligne de signal (302, 402), le téléphone mobile (308) est adapté pour ajuster ses niveaux de signal interne en fonction dudit signal audio (406) de façon à s'adapter au dispositif auxiliaire (104).

3. Agencement de circuits selon la revendication 1 ou 2, **caractérisé en ce que** le dispositif auxiliaire (104) est adapté pour transmettre les données d'identification le concernant en utilisant le bus de données numériques (402) du téléphone (308).

4. Agencement de circuits selon la revendication 3, **caractérisé en ce que** le téléphone mobile (308) est adapté pour reconnaître la déconnexion du dispositif auxiliaire (104) sur la base d'un message manquant.

5. Agencement de circuits selon la revendication 1 ou 2, **caractérisé en ce que** le dispositif auxiliaire (104) comprend un composant électrique tel que, par exemple, une résistance (304), qui est connecté entre la ligne (302) employée pour identifier le dispositif auxiliaire (104) et que l'on appellera une ligne d'accroche (302) par la suite, et une troisième ligne (306), la résistance comprenant une impédance (résistance) spécifiée sur la base du type de dispositif auxiliaire (104), et le téléphone mobile (308) identifie le dispositif auxiliaire (104) en fournissant un courant et/ou une tension entre la ligne d'accroche (302) et la troisième ligne (306) et en mesurant la tension et / ou le courant produit dans la ligne d'accroche (302).

6. Agencement de circuits selon la revendication 5, **caractérisé en ce que** le téléphone mobile (308) comprend un convertisseur d'analogique en numérique (312) servant à convertir les données de tension de la ligne d'accroche (302) en des données numériques, et le microprocesseur (108) est adapté pour lire lesdites données numériques de façon à identifier le dispositif auxiliaire (104).

7. Agencement de circuits selon la revendication 1, **caractérisé en ce que** les paramètres de niveau de signal (110), qui sont utilisés quand aucun dispositif auxiliaire (104) n'est connecté ou quand aucune donnée des paramètres de niveau de signal relatifs au dispositif auxiliaire connecté (104) n'est stockée à l'intérieur des moyens de mémoire, sont stockés dans les moyens de mémoire du téléphone mobile (308).

8. Agencement de circuits selon la revendication 1 ou 7, **caractérisé en ce que** le microprocesseur (108) lit, à partir des moyens de mémoire, les paramètres de niveau de signal (110) relatifs au type de dispositif auxiliaire connecté (104) ou les paramètres de niveau de signal (110) relatifs à la partie audio du téléphone mobile (308), et définit (216) le processeur de signaux numériques (114) du téléphone (308) et / ou l'amplification du codeur - décodeur (112) à des valeurs qui correspondent aux paramètres (110) lus.
